# FASCICULE DE BREVET EUROPEEN

(11) **EP 0 631 804 B1**
(45) Date de publication et mention de la délivrance du brevet: **31.07.1996**
(21) Numéro de dépôt: 94401491.9
(22) Date de dépôt: 30.06.1994
(51) Int. Cl.: B01D 35/18

(54) **Filtre à huile associé à un dispositif de refroidissement**
Ölfilter mit einer Kühlvorrichtung
Oil filter with cooling device

(30) Priorité: 02.07.1993 FR 9308141
(43) Date de publication de la demande: 04.01.1995
(73) Titulaire: FILTRAUTO, F-78180 Montigny le Bretonneux (FR)
(72) Inventeur: Blazek, Bernard, F-75005 Paris (FR)
(74) Mandataire: Burbaud, Eric

(56) Documents cités:
- EP-A- 0 200 809
- US-A- 4 831 980

## Description

L'invention est relative aux filtres à huile pour moteurs à combustion interne, filtres associés à des dispositifs pour refroidir ladite huile.

Elle vise plus particulièrement ceux, de ces filtres, qui sont destinés à être montés sur les carters desdits moteurs et qui comprennent, d'une part, une cuve cylindrique assemblable à sa base sur le carter et contenant un échangeur thermique parcourable à la fois par l'huile à refroidir et par de l'eau de refroidissement, ledit échangeur étant monté dans la cuve en vissant sur le carter, directement ou non, une pièce centrale filetée extérieurement et creuse sur toute sa longueur, et d'autre part, un filtre à huile comportant lui-même un boîtier cylindrique et, dans ce boîtier, une cartouche filtrante cylindrique, ledit filtre étant monté sur l'échangeur, coaxialement à celui-ci, de façon telle que les espaces extérieur et intérieur à ladite cartouche communiquent respectivement avec la sortie d'huile de l'échangeur et avec l'intérieur de la pièce filetée.

Dans des modes de réalisation connus de tels ensembles filtres-échangeurs, le boîtier cylindrique du filtre est indépendant de la cuve et la cartouche filtrante y est enfermée de façon inamovible (voir document EP-A-0 200 809).

Dans ces conditions, un remplacement de la cartouche filtrante exige un remplacement global de l'ensemble du boîtier et de son contenu.

L'invention a pour but, notamment, de rendre beaucoup plus économiques les remplacements en question en permettant de les limiter à la cartouche filtrante elle-même.

A cet effet, les ensembles filtres-échangeurs du genre en question selon l'invention sont essentiellement caractérisés en ce que la paroi latérale de la cuve est prolongée au-delà de l'échangeur de façon à constituer elle-même la paroi latérale du boîtier du filtre à huile et en ce que ce prolongement est coiffé par un couvercle facilement amovible dont l'ouverture permet un remplacement facile de la cartouche.

Dans des modes de réalisation préférés, on a recours en outre à l'une et/ou à l'autre des dispositions suivantes :
- l'échangeur thermique est d'un type à plaques superposées,
- dans un ensemble filtre-échangeur du genre en question comportant des joints annulaires d'étanchéité vis-à-vis de l'eau compris entre la face intérieure de la paroi latérale de la cuve et une portée annulaire extérieure de l'échangeur, l'un au moins de ces joints comprend deux joints toriques axialement rapprochés, ladite paroi latérale étant percée d'au moins un trou radial faisant communiquer avec l'extérieur l'intervalle annulaire compris entre les deux joints.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre en coupe axiale un ensemble filtre-échangeur établi selon l'invention.

La figure 2 montre à plus grande échelle un détail de cet ensemble.

L'ensemble en question est destiné à filtrer et refroidir l'huile de lubrification d'un moteur à combustion interne.

Le carter 1 de ce moteur comprend une portée plane circulaire de réception 2 dans laquelle débouche un alésage axial fileté 3 et un trou excentré 4.

C'est sur cette portée qu'est montée la base d'un boîtier cylindrique 5 sans fond contenant, superposés axialement un premier étage A d'échange thermique et un second étage B de filtration.

Le premier étage A est constitué par un échangeur thermique à plaques 6 connecté à un raccord radial 7 d'alimentation en eau froide et à un raccord radial 8 d'évacuation d'eau réchauffée.

Cet échangeur présente la forme générale d'une galette cylindrique de révolution épaisse en direction axiale et traversée axialement de part en part par une vis creuse de fixation 9.

Le pied de cette vis 9 est vissé dans l'alésage fileté complémentaire 3 et la portion débordante de sa tête repose sur le bord d'un orifice axial 10 évidé dans une plaque transversale 11.

Cette plaque 11 sépare les deux étages A et B.

La portion supérieure du boîtier 5, ou plus précisément sa portion la plus éloignée du carter 1, sert de cuve de réception pour une cartouche filtrante cylindrique 12.

D'une façon connue en soi, cette cartouche 12 est avantageusement constituée par un cylindre de papier plissé 12₁ interposé axialement entre deux rondelles 12₂ et entourant un tube perforé intérieur 12₃.

Cette cartouche est disposée, à l'intérieur du boîtier 5, de façon telle que son volume intérieur communique directement avec le volume intérieur de la vis creuse 9 et qu'un espace périphérique annulaire 13 soit réservé autour d'elle, à l'intérieur du boîtier.

La base de la cartouche 12 repose en outre sur un redan annulaire 9₁ de la tête de la vis 9 de façon telle qu'un espace 14 soit réservé entre le dessous de cette cartouche et la plaque 11.

Un couvercle 15 facile à monter et démonter à la main ou avec une clé est en outre prévu pour fermer le sommet du boîtier.

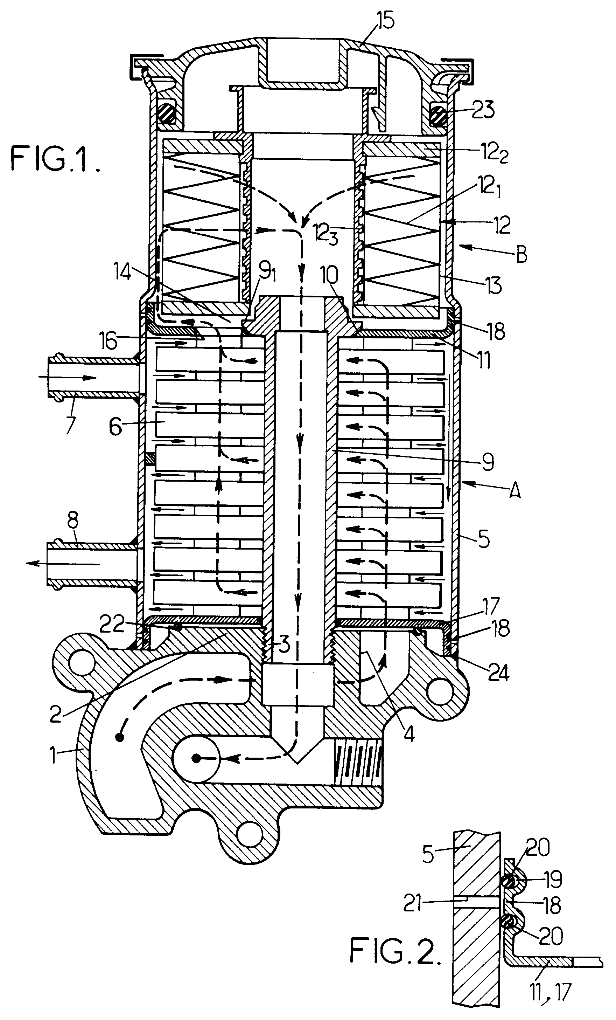

On a représenté sur la figure 1 par des trajets fléchés interrompus le circuit suivi par l'huile à refroidir et filtrer.

Cette huile est admise dans l'ensemble décrit ci-dessus, à partir du trou excentré 4, à la base de l'échangeur à plaques 6.

Au sommet de cet échangeur, après avoir été refroidie par l'eau froide circulant dans celui-ci (selon les flèches minces continues), l'huile traverse la plaque 11 à travers un trou excentré 16 de cette plaque.

De là, elle est admise dans l'espace 13 à la périphérie de la cartouche filtrante 12, puis traverse radialement celle-ci.

Après filtration, elle est recueillie au centre de la cartouche et, de là, circule axialement à l'intérieur de la vis creuse 9 puis, à l'extrémité de cette vis, à l'intérieur de l'alésage 3 du carter : à partir de cet alésage, l'huile refroidie et filtrée est recyclée dans le moteur de toute façon désirable connue.

Bien entendu, l'étanchéité doit être réalisée d'excellente façon aussi bien vis-à-vis de l'eau en circulation dans l'échangeur à plaques 6 que vis-à-vis de l'huile en circulation dans l'ensemble.

Pour ce qui est de l'eau, on réalise avantageusement l'étanchéité aux deux extrémités axiales de l'échangeur 6 de la façon suivante.

A chacune de ces extrémités, on prévoit une plaque ou rondelle rigide présentant un rebord périphérique rabattu axialement, rebord dont la face cylindrique extérieure est appliquée d'une manière quasi-jointive contre la portion en regard de la surface intérieure du boîtier 5.

Cette rondelle n'est autre que la périphérie de la plaque 11 ci-dessus au niveau qui sépare les deux étages A et B.

Elle est constituée par le pourtour d'une plaque 17 à la base de l'ensemble.

Chacun des rebords rabattus ci-dessus, désigné par la référence 18 comme plus visible sur la figure 2, est évidé extérieurement par deux gorges annulaires 19 légèrement écartées l'une de l'autre en direction axiale et garnies chacune par un joint torique 20 qui est appliqué contre la portion de paroi en regard du boîtier 5.

Des petits trous 21 sont percés dans cette portion de paroi au niveau axial de l'espace compris axialement entre les deux joints 20.

Ces petits trous 21 servent à évacuer vers l'extérieur du boîtier 5 les gouttes d'eau qui auraient pu s'échapper des volumes affectés à l'eau dans l'échangeur à plaques 6, en franchissant la barrière constituée par l'un des joints 20.

Cette évacuation empêche donc que, même si une telle fuite s'avère possible, les très faibles volumes d'eau correspondants ne puissent gagner une chambre réservée à la circulation de l'huile.

Il est à noter que le double joint qui vient d'être décrit joue également un rôle d'étanchéité dans le sens axial inverse de celui observé pour l'étanchéité vis-à-vis de l'eau : c'est ainsi que les traces d'huile qui pourraient provenir de la chambre 14 en franchissant le joint supérieur 20 du double joint supérieur sont évacuées vers l'extérieur du boîtier par les trous 21 correspondants, toute comme les traces d'eau ci-dessus.

Pour ce qui est de l'étanchéité vis-à-vis de l'huile en circulation, on prévoit en outre :
- un joint torique 22 interposé axialement entre la portée 2 du carter 1 et la base de l'échangeur à plaques 6 -ou la plaque 17 constitutive de cette base-,
- et un joint torique 23 interposé radialement entre une jupe cylindrique comprise par le couvercle 15 et le bord supérieur de la paroi intérieure du boîtier 5.

Pour assurer une bonne étanchéité entre le pourtour de la tête de la vis creuse 9 et le bord de l'alésage 10 contre lequel ce pourtour vient porter, on donne avantageusement à ces deux surfaces complémentaires un profil tronconique comme bien visible sur la figure 1.

Comme également visible sur cette figure, le boîtier 5 est de préférence fixé par soudure sur le carter 1, le long d'un cordon de soudure 24 entourant la portée 2.

L'ensemble ainsi constitué est particulièrement simple à construire et à monter, très robuste, spécialement efficace en ce qui concerne l'isolation mutuelle des circuits d'huile et d'eau, et il se prête à un remplacement très facile de la cartouche filtrante 12 moyennant la simple ouverture momentanée du couvercle 15.

## Revendications

1. Ensemble filtre à huile-échangeur de chaleur destiné à être monté sur un carter (1) de moteur, comprenant, d'une part, une cuve cylindrique (5) assemblable à sa base sur le carter et contenant un échangeur thermique (6) parcourable à la fois par l'huile à refroidir et par de l'eau de refroidissement, ledit échangeur étant monté dans la cuve en vissant sur le carter, directement ou non, une pièce centrale (9) filetée extérieurement et creuse sur toute sa longueur, et d'autre part, un filtre à huile comportant lui-même un boîtier cylindrique et, dans ce boîtier, une cartouche filtrante cylindrique (12), ledit filtre étant monté sur l'échangeur, coaxialement à celui-ci, de façon telle que les espaces extérieur et intérieur à ladite cartouche communiquent respectivement avec la sortie d'huile (16) de l'échangeur et avec l'intérieur de la pièce filetée, caractérisé en ce que la paroi latérale de la cuve (5) est prolongée au-delà de l'échangeur de façon à constituer elle-même la paroi latérale du boîtier du filtre à huile et en ce que ce prolongement est coiffé par un couvercle (15) facilement amovible dont l'ouverture permet un remplacement facile de la cartouche (12).

2. Ensemble selon la revendication 1, caractérisé en ce que l'échangeur thermique (6) est d'un type à plaques superposées.

3. Ensemble selon l'une quelconque des revendications 1 et 2, comportant des joints annulaires d'étanchéité vis-à-vis de l'eau compris entre la face intérieure de la paroi latérale de la cuve (5) et une portée annulaire extérieure (18) de l'échangeur, caractérisé en ce que l'un au moins de ces joints comprend deux joints toriques (19) axialement rapprochés, ladite paroi latérale étant percée d'au moins un trou radial (21) faisant communiquer avec l'extérieur l'intervalle annulaire compris entre les deux joints.

## Claims

1. Oil filter / heater exchanger assembly designed to be mounted on an engine crankcase (1), comprising on the one hand a cylindrical container (5) which can be fixed at its base to the crankcase and contains a heat exchanger (6) through which both the oil to be cooled and the cooling water can pass, the said exchanger being mounted in the container by screwing onto the crankcase, directly or otherwise, a central piece (9) which is threaded externally and hollow over its entire length, and on the other hand an oil filter itself having a cylindrical housing and, in this housing, a cylindrical filter cartridge (12), the said filter being mounted on the exchanger, coaxially with it, so that the spaces external and internal to the said cartridge communicate respectively with the oil outlet (16) of the exchanger and with the inside of the threaded piece, characterised in that the side wall of the container (5) is extended beyond the exchanger so as to constitute itself the side wall of the housing of the oil filter and in that this extension is capped by an easily removable cover (15) whose opening allows easy replacement of the cartridge (12).

2. Assembly according to Claim 1, characterised in that the heat exchanger (6) is of a stacked plate type.

3. Assembly according to either one of Claims 1 and 2, having annular sealing joints vis-a-vis the water contained between the internal face of the side wall of the container (5) and an outer annular surface (18) of the exchanger, characterised in that at least one of these joints comprises two axially-close O-ring seals (19), the said side wall having in it at least one radial hole (21) connecting to the outside the annular gap between the two joints.

## Patentansprüche

1. Aus einem Ölfilter und einem Wärmetauscher bestehende Anordnung zur Befestigung an einem Motorgehäuse, die aus folgenden Teilen besteht: einerseits einem zylindrischen Behälter (5), der mit seinem Sockel an dem Gehäuse anbringbar ist und einen Wärmetauscher (6) enthält, der gleichzeitig von dem zu kühlenden Öl und dem Kühlwasser durchströmt wird, wobei der Austauscher in dem Behälter in der Weise befestigt ist, daß auf das Gehäuse direkt oder indirekt ein Mittelstück (9) aufgeschraubt ist, das außen mit einem Gewinde versehen ist und über seine gesamte Länge hohl ist, und andererseits einem Ölfilter, der selbst aus einem zylindrischen Gefäß besteht und in diesem Gefäß eine zylindrische Filterpatrone enthält, wobei der Filter über dem Austauscher koaxial zu diesem derart befestigt ist, daß die Freiräume außerhalb und innerhalb der Patrone mit dem Ölaustritt (16) des Austauschers bzw. mit dem Innenraum des mit dem Gewinde versehenen Mittelstücks in Verbindung stehen, dadurch gekennzeichnet, daß die Seitenwandung des Behälters (5) über den Wärmetauscher hinaus so verlängert ist, daß sie selbst die Seitenwandung des Gefäßes des Ölfilters bildet und daß diese Verlängerung durch einen Deckel (15) abgedeckt ist, der leicht abnehmbar ist und dessen Öffnung den leichten Austausch der Filterpatrone (12) ermöglicht.

2. Anordnung nach Anspruch 1, dadurch gekennzeichnet, daß der Wärmetauscher (6) ein Plattenaustauscher mit übereinander angeordneten Platten ist.

3. Anordnung nach einem der Ansprüche 1 und 2, die ringförmige, wasserdichte Abdichtungen zwischen der inneren Oberfläche der Seitenwandung des Behälters (5) und einer ringförmigen, äußeren Fläche (18) des Wärmetauschers enthält, dadurch gekennzeichnet, daß wenigstens eine der Abdichtungen aus zwei torischen Dichtungen (19) besteht, die in axialer Richtung nah beieinander angeordnet sind, wobei die Seitenwandung mit wenigstens einer radialen Bohrung (21) versehen ist, die den ringförmigen Zwischenraum zwischen den beiden Dichtungen mit der äußeren Umgebung verbindet.
